Europäisches Patentamt

European Patent Office

Office européen des brevets

(19)

(11) Veröffentlichungsnummer: **0 160 934**

**A2**

(12) # EUROPÄISCHE PATENTANMELDUNG

(21) Anmeldenummer: 85105349.6

(22) Anmeldetag: 02.05.85

(51) Int. Cl.⁴: **B 60 D 1/00**
**B 60 D 1/06**

(30) Priorität: 05.05.84 DE 3416631
24.05.84 DE 3419322
07.06.84 DE 3421174

(43) Veröffentlichungstag der Anmeldung:
13.11.85 Patentblatt 85/46

(84) Benannte Vertragsstaaten:
AT BE CH DE FR GB IT LI LU NL SE

(71) Anmelder: Jürgens, Walter, Dr. Ing.
Horbacher Strasse 313
D-5100 Aachen-Horbach(DE)

(72) Erfinder: Jürgens, Walter, Dr. Ing.
Horbacher Strasse 313
D-5100 Aachen-Horbach(DE)

(54) **Trennbare Anhängerkupplung für Kraftfahrzeuge.**

(57) Die Erfindung betrifft eine trennbare Anhängerkupplung, bei der bei Einführung der Kugelstange der Kupplung diese gegen eine Sperre stößt und dadurch ein Element auslöst, das in die Ausnehmung in der kugelstange eingreift und damit eine Verriegelung zwischen dem am Kraftfahrzeug befestigten Grundkörper der Anhängerkupplung und der Kugelstange vornimmt.

In Ausgestaltung ist die Position des Fixierelementes gegenüber dem Grundkörper der Kupplung in der montierten Position der Kugelstange durch eine weitere Sperre, die nach dem Eingreifen und Verkuppeln des Grundkörpers mit der Kugelstange in Aktion tritt, gesichert.

**0160934**

-1-

Beschreibung Trennbare Anhängerkupplung für Kraftfahrzeuge

Die Erfindung betrifft eine trennbare Anhängerkupplung für Kraftfahrzeuge, bei der ein am Kraftfahrzeug befestigter Grundkörper eine von diesem trennbare Kugelstange aufnimmt.

Anhängerkupplungen dieser Art sind bekannt; die Verbindung der trennbaren Teile der Anhängerkupplungen erfolgt dabei durch gesicherte Befestigungsmittel wie Schrauben und Muttern, Bolzen mit Exentern usw. Diese Verbindungsart hat jedoch den Nachteil, daß sich bei nachlässiger Handhabung der abnehmbare Teil löst und somit eine große Gefahr auftreten kann.

Entsprechend ist es die Aufgabe der Erfindung, eine Anhängerkupplung der oben bezeichneten Art vorzuschlagen, bei der eine sichere Halterung des trennbaren Teils der Anhängerkupplung im fest mit der Karosserie verbundenen Teil gewährleistet ist und bei der bei nicht sicher durchgeführter Verbindung der trennbaren Teile der Anhängerkupplung miteinander der abnehmbare Teil herausfällt oder aber in eine Position fällt, die ebenfalls signalisiert, daß keine sichere Verbindung der trennbaren Teile mehr besteht. Diese Aufgabe wird dadurch gelöst, daß im montierten Zustand der Anhängerkupplung ein im Grundkörper bewegliches und in Bewegungsrichtung federbelastetes Fixierelement in eine Ausnehmung der Kugelstange eingreift, (es können auch mehrere Fixierelemente sein) und daß eine am Grundkörper angeordnete durch die Einschubbewegung der Kugelstange entfernbare Sperre vorgesehen ist, die bei getrennter Anhängerkupplung in Haltekontakt mit dem Fixierelement steht und beim Einführen der Kugelstange in den Grundkörper in Wirkverbindung mit derselben tritt in der Weise, daß die Sperre aus ihrer Halteposition wegbewegt wird und das Fixierelement somit freigeben wird, wobei in dieser Position das Fixierelement mit der Ausnehmung der Kugelstange in ungehinderter Eingriffposition ist. Durch diese Anordnung wird sichergestellt, daß, abhängig von der korrekten Einführung des trennbaren Teiles der Anhängerkupplung in den festen Teil bis in einer gewünschten Tiefe des Eindringens die Verriegelung des trennbaren Teiles im festen Teil gesteuert und ausgelöst wird (Falle)

In Ausgestaltung der Erfindung kann eine weitere Sperre für die Eingriffposition angeordnet sein, damit das Fixierelement in dieser Position sich nicht lösen kann. Beide Sperren können federbelastet oder wo möglich durch das Schwerkraftprinzip funktionieren. Das Fixierelement kann mit translatorischer Bewegung in die Kugelstange eingreifen; aber auch eine rotatorische Bewegung ist möglich. Bei der translatorischen Bewegung ist es sinnvoll, den Sperrteil des Fixierelementes mit mindestens einer schrägen Ebene zu versehen, die korrespondiert in einer innerhalb der Ausnehmung in der Kugelstange angeordneten Ebene. Dadurch ist sichergestellt, daß die Bewegung des Fixierelementes in die Ausnehmung in der Kugelstange erleichtert wird. Wenn dabei die am Fixierelement angeordnete, schräge Ebene so ausgebildet und angeordnet ist, daß beim Einschub der Kugelstange diese in die Einschubrichtung bewegbar ist, so ergeben sich weitere Vorteile, da eine Komponente der auf das Fixierelement wirkenden Federkraft über den Fixierbolzen die Kugelstange in die Montageposition drückt. Bei der rotatorischen Fixierbewegung kann z. B. ein torsionsfederbelasteter Bolzen, der im Eingriffbereich in die Kugelstange halbkreisförmig ausgebildet ist, und in Fixierposition in eine halbkreisförmige Ausnehmung der Kugelstange eingreift, durch eine Sperre im Nichteingriffzustand gehalten werden, die durch die Einschubbewegung in dem Moment durch Kontakt mit der Kugelstange entfernt wird, in dem das Fixierelement durch Drehen den Teil mit dem halbkreisförmigen Querschnitt in die halbkreisförmige Ausnehmung der Kugelstange einwandfrei hineinbringen kann. Eine weitere Sperre hält das Fixierelement in dieser Position.

In weiterer Ausgestaltung der Erfindung kann der in den Grundkörper eingeführte Teil der Kugelstange sowie der die Kugelstange aufnehmende Teil des Grundkörpers konisch ausgebildet sein. Hierdurch wird eine Trennung der Teile der Kupplung voneinander insbesondere dann erleichtert, wenn keine Verriegelungswirkung mehr vorhanden ist oder auch nicht eingetreten ist. Eine besonders einfache Konstruktion ergibt sich dann, wenn die konisch ausgebildeten Teile die Form von Kegelstümpfen haben. Dabei ist auch vorteilhaft, wenn die konischen Teile der Kugelstange und des Grundkörpers mit in Richtung der Einschubrichtung verlaufenden Nuten bzw. Federn versehen sind; hierdurch werden Verdrehkräfte, wie sie insbesondere bei einer Benutzung der Anhängerkupplung im Anhängerbereich günstig aufgenommen, ohne daß die Verriegelungseinrichtung der Kugelstange im Grundteil über Gebühr belastet wird.

Wenn die Kontaktflächen der Kugelstange mit dem Grundkörper einen Winkel in Längsmittelebene einschließen, der eine Selbsthemmung ausschließt, also der Winkel größer 14 ° ist, so ist das eine weitere Verbesserung der erfindungsgem. Anordnung. Die Ausschubkraft kann aber auch noch durch eine Federkraft, die entgegen der Einschubrichtung arbeitet, bewirkt werden. In einem solchen Fall ist es sogar von Vorteil die Kugelstange mittels eines Hebels gegen die Ausschubfederkraft einzuschieben. Dieser Hebel bzw. Schlüssel kann auch zur Entfernung des Fixierelementes bei der Demontage dienen. Die geometrischen Verhältnisse zwischen der Sperre des Fixierelementes, die dasselbe vor dem Eingriff hält, und den Berührungsteil der Kugelstange kann über eine Verstellvorrichtung den Notwendigkeiten der geometrischen Zuordnung des Fixierelementes und der Kugelstange angepaßt werden, sodaß die Auslösung des Fixierelementes genau zum richtigen Zeitpunkt erfolgt, wenn die Positition der Ausnehmung der Kugelstange und des eingreifenden Teiles des Fixierelementes optimal miteinander korrespondieren. Die Erfindung wird weiter erläutert anhand von Figuren, in denen verschiedene Ausführungsformen der Erfindung dargestellt sind.

Es zeigen:

Fig. 1 eine Draufsicht auf eine Ausführungsfomr der Erfindung, teilweise geschnitten

Fig. 2 einen Schnitt entlang der Linie A-B in der Fig. 1

Fig. 3 einen Schnitt entlang der Linie C-D in der Fig. 1

Fig. 4 eine perpektive Ansicht einer anderen Ausführungsform der Erfindung

Fig. 5 einen Schnitt entlang der Linie E-F in der
Darstellung gem. Fig. 4

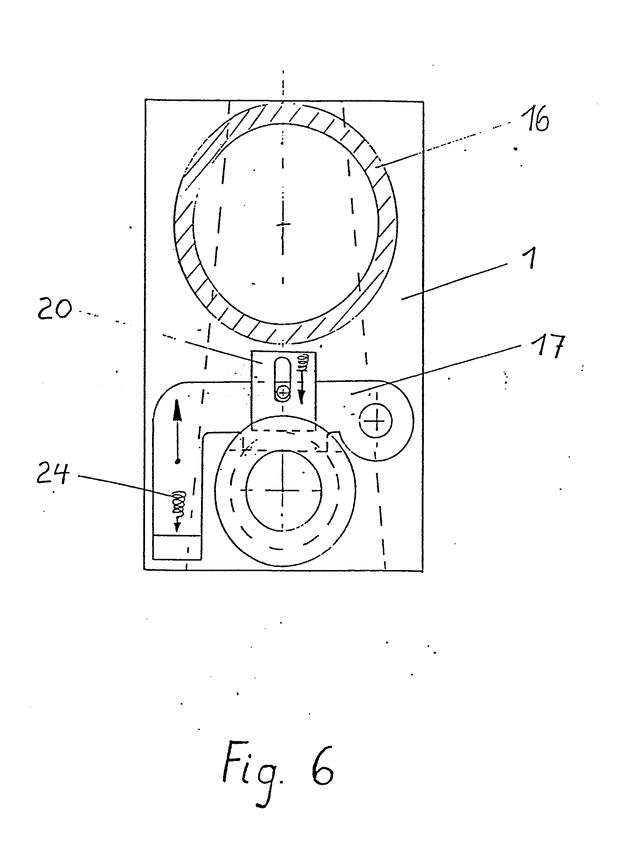

Fig. 6 eine Seitenansicht der Ausführungsform gem.

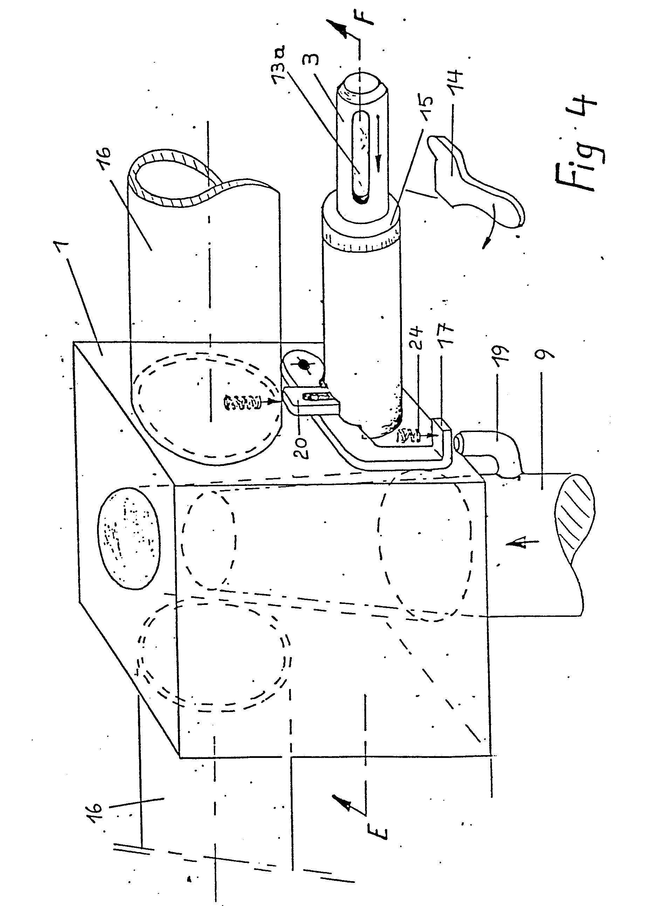

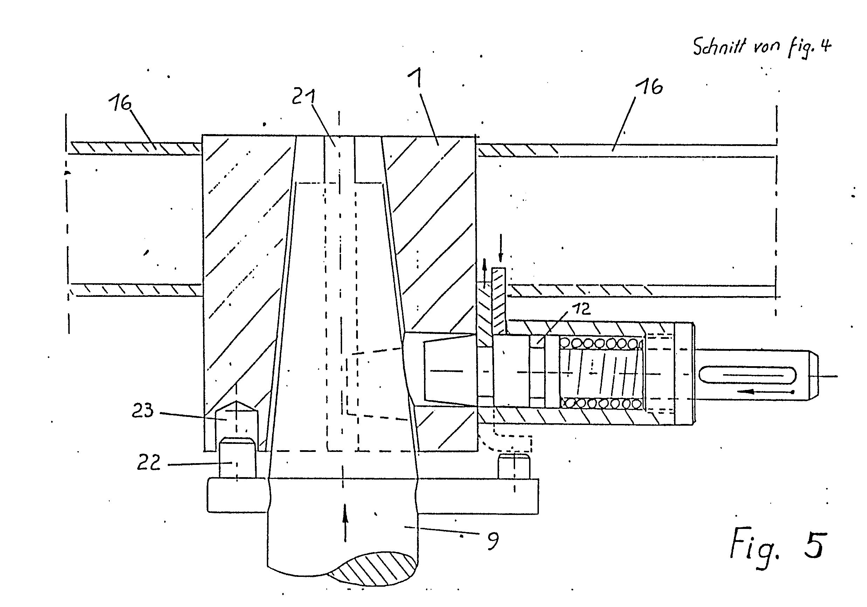

Fig 4 und 5 wobei jedoch Teile fortgelassen sind.

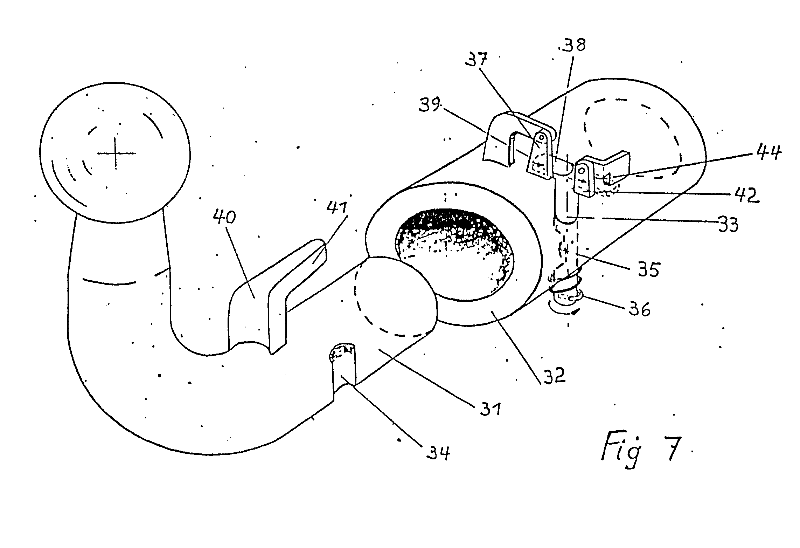

Fig. 7 zeigt eine Lösung mit rotatorisch bewegtem Fixierelement.

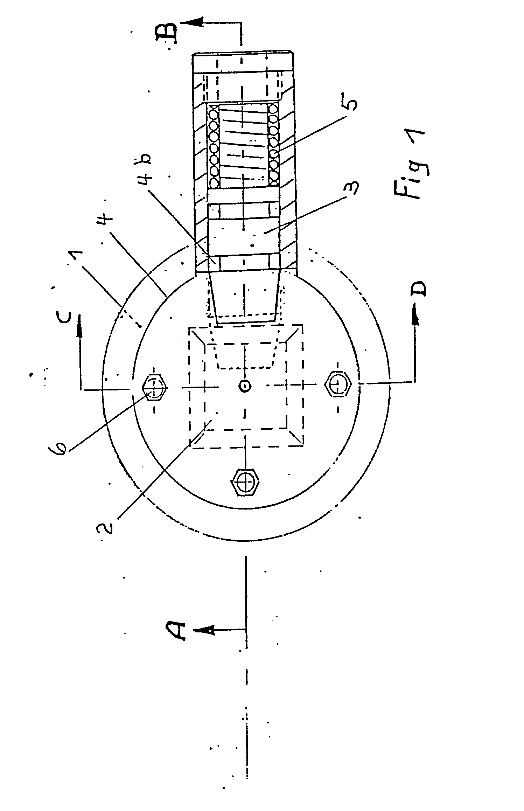

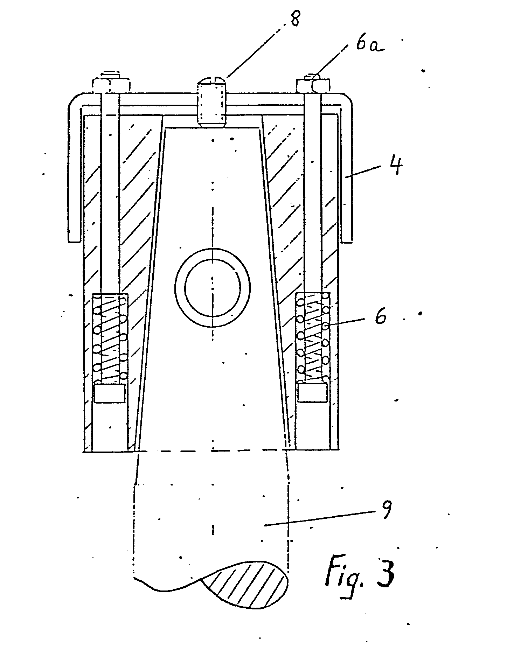

In den Figuren ist ein Grundkörper der trennbaren Anhängerkupplung mit
1 bezeichnet. Im Grundkörper, belastet durch Federn 5, ist ein Fixierbolzen 3 angeordnet, der in der getrennten Position der Anhängerkupplung
durch eine in eine Sperrnut 4b eingreifende Sperrvorrichtung 4 im Grundkörper 1 gehalten wird. Die Sperrvorrichtung 4 ist in der Ausführungsform
der Fig. 1-3 hutförmig ausgebildet und ist durch Federn 6 unter Spannung
gehalten, wobei die Führung der Sperrvorrichtung 4 durch Schrauben 6a erfolgt. In der Sperrvorrichtung 4 ist ein Anschlag 8 angeordnet, der einstellbar sein kann; der untere Teil des Anschlags 8 ist als Kontaktelement
27 bezeichnet. In den Grundkörper 1 eingeführt wird eine Kugelstange 9, die
die für die Kupplung des Anhängers erforderliche Kugel trägt. In dem Teil
der Kugelstange 9, die in den Grundkörper 1 eingeführt wird, befindet sich
eine Ausnehmung 10. Diese Ausnehmung kann als konische Bohrung ausgeführt
werden. Der Sperrteil 28 des Fixierbolzens 3 greift im Montagezustand der
Kupplung in die Ausnehmung 10 ein. Dabei ist die Anordnung so ausgelegt,
daß im Augenblick der Lösung der Sperrvorrichtung 4 aus der Sperrnut 4b sich
der Fixierbolzen 3 mit dem Sperrteil 28 in einer solchen Position befindet, daß der Sperrteil 28

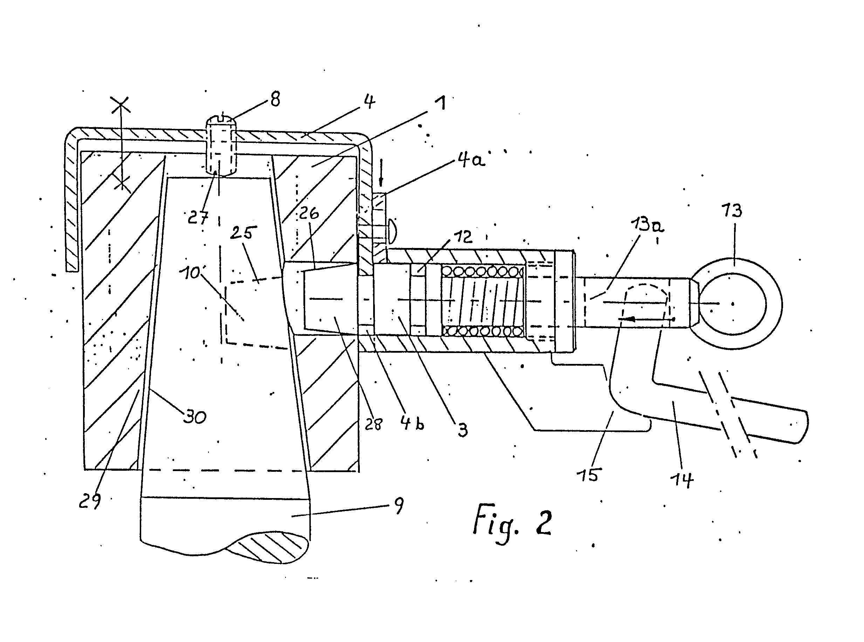

etwa mit der Ausnehmung 10 fluchtet; dadurch ist sichergestellt, daß der Sperrteil 28 in die Kugelstange eingreift und diese in Einschubrichtung drückt. Wird die Ausnehmung 10 etwas größer ausgeführt als das Sperrteil 28 des Fixierbolzens 3, wobei diese ein Konus sein kann, und liegt verwendete Schräge geringfügig tiefer als die des Fixierbolzens, so zieht dieser die Kugelstange in die entsprechende Öffnung in den Grundkörper 1 hinein. Zur Aufnahme der seitlichen Kräfte übertragen von der Kugelstange auf den Grundkörper, können das Aufnahmeteil 29 des Grundkörpers 1 und das Kupplungsteil 30 der Kugelstange als Vierkant ausgebildet sein; es ist jedoch auch möglich, diese Teile als Kegel auszubilden, die Nuten 21 und entsprechende Federn aufweisen. In der Sperrvorrichtung 4 ist, wie insbesondere aus Fig. 2 hervorgeht, eine weitere Sperrvorrichtung 4a angeordnet, die federbelastet ist und unter der Wirkung dieser Feder dann in eine Sperrnut 12 in Fixierbolzen 3 eindringt, wenn die Kupplung sich in der montierten Position befindet. Die Demontage der Kugelstange 9 kann dadurch vorgenommen werden, daß am Ende ein Bügel 13 zum Herausziehen des Fixierbolzens 3 an diesem angeordnet ist. Bei einer anderen Ausführungsform ist es jedoch auch möglich die Anordnung mit einem Schlitz 13 a zu versehen, in den ein Schlüssel 14 gesteckt werden kann, der um einen Drehpunkt 15 drehbar betätigt wird. Dadurch wird der Fixierbolzen 3 zurückbewegt, bis die Sperrvorrichtung 4 in die Sperrnut 4b einschnappt.

Bei der in Fig. 4 dargestellten Ausführungsform ist eine seitliche Klinke 17 angeordnet. Der Grundkörper 1 ist hier integriert in ein in der Stoßstange des Kraftfahrzeuges verlaufendes Querrohr 16. Auch hier wird der Fixierbolzen 3 durch die Klinke 17, die die Funktion einer Sperrvorrichtung innehat, in der getrennten Position der Kupplung außer Eingriff mit der Ausnehmung 10 in der Kugelstange 9 gehalten. Beim Einstecken der Kugelstang 9 wird über eine an dieser angeordneten Nase 19 die Klinke 17 angehoben und gibt somit den Fixierbolzen 3 frei. An der Klinke 17 ist eine weitere Sperre 20 angeordnet, die dann fällt, wenn der Fixierbolzen 3 in Endposition steht, also wenn der Grundkörper 1 mit der Kugelstange 9 verbunden ist. Auch die Klinke 17 zieht eine Feder 24.

Aus der Darstellung gem. Fig. 5 geht hervor, daß die Absicherung in Drehrichtung  zwischem dem Grundkörper 1 und der Kugelstange 9 auch dadurch erfolgen kann, daß Bolzen 22, an der Kugelstange 9 angeordnet, in Bohrungen 23 eingreifen, oder umgekeht. Zum Ausrücken des Fixierbolzens 3 kann wiederum ein Schlüssel verwendet werden, der über einen Drehpunkt nach dem Einstecken in einen Schlitz des Fixierbolzens denselben durch Drehen herauszieht.

In Figur 7 ist perspektivisch eine Konstruktion mit rotatorischer Fixierelementbewegung dargestellt. Die Kugelstange 31 wird in die am Fahrzeug befestigte Büchse 32 geschoben. Das Fixierelement 33 ist dort, wo die Kugelstange eine halbkreisförmige Ausnehmung 34 aufweist, ebenfalls halbkreisförmig 35 ausgebildet. Das Fixierelement 33 wird durch eine Torsionsfeder 36 beim Herausdrehen des halbkreisförmigen Teiles 35 durch Drehung gesperrt. (sodaß der halbkreisförmige Teil 35 nicht im Eingriff ist) Beim Drehen des Fixierelementes 33 wird durch den Hebel 38 über die schräge Ebene 39 des Pendels 37, dasselbe, das als Sperre dient, weggeschwenkt und fällt wieder vor den Hebel 38 und hält somit das Fixierelement in gespannter Stellung. Bei Einführen der Kugelstange 31 wird über die Seite 41 des Teils 40, das als Sperre dienende Pendel 37 wegbewegt. Sobald der halbkreisförmige Teil 35 mit 34 übereinstimmt, ist das Pendel 37 durch dieses Teil 40 so weit wegbewegt, daß das Fixierelement 33 freigegeben wird, die Sperre also wegfällt und sich das Fixierelement um ca. 180 ° dreht. Durch Eindrehen des halbkreisförmigen Teiles 35 des Fixierelementes 33 in die halbkreisförmige Ausnehmung 34 der Zugstange 31 wird die Zugstange 31 fixiert. Das Pendel 42 und der Anschlag 44 halten das Fixierelement in dieser Stellung. Das Pendel 42 arbeitet ebenfalls mit schräger Ebene und klinkt weg, um sich nach dem Ausschwenken vor das Teil 38 des Fixierelementes zu hängen. Dieser Mechanismus kann auch mit einer federbeaufschlagten Sperre statt einem Pendel als Sperre aufgebaut sein.

Dr. Ing. Walter Jürgens, Horbacher Str. 313, 5100 Aachen-Horbach

**0160934**

-7-

Weiterhin kann auch die Kugelstange den Zylinder aufweisen und am KFZ der Bolzen 31 befestigt sein. Dies gilt übrigens für alle hier dargestellten Lösungen.

Es gibt auch noch andere Möglichkeiten, über eine Sperre die Sicherheit der Verbindung von Kugelstange und am Fahrzeug befestigen Teil durch ein Fixierelement zu erreichen. Das Prinzip ist aber immer das gleiche, nämlich mittels einer Sperre das Fixierelement solange zu halten, bis dasselbe mit dem Gegenstück ohne Schwierigkeit in Eingriff gelangt.

-8-

Patent- und Schutzansprüche Trennbare Anhängerkupplung für Kraftfahrzeuge.

1.) Trennbare Anhängerkupplung für Kraftfahrzeuge, bei der ein am
Kraftfahrzeug befestigter Grundkörper eine von diesem trennbare Kugelstange aufnimmt, dadurch gekennzeichnet, daß im montierten Zustand der Anhängerkupplung ein im Grundkörper (1) (32)
beweglich angeordnetes und in Bewegungsrichtung federbelastetes
Fixierelement (3) (33) in eine Ausnehmung (10) (34) in der Kugelstange (9) (31) eingreift und daß eine am Grundkörper (1) (32)
angeordnete und in Richtung der Einführbewegung der Kugelstange
(9) (31) in den Grundkörper (1) bewegliche federbelastete Sperre
(4) (37) vorgesehen ist, die bei getrennter Anhängerkupplung,
als Halteelement für das gespannte Fixierelement (3) (33) dient
und daß diese Sperre (4) (37) in Wirkverbindung mit der Kugelstange (9) (31) oder einem an dieser befestigten Kontaktelement (27 (41)
tritt in der Weise, daß die Sperre (4) (37) aus der Haltestellung des
Fixierelementes (3) (33) wegbewegt ist und das Fixierelement (3) (33)
somit freigegeben wird, wobei in dieser Position das Fixierelement
(3) (33) mit der Ausnehmung (10) (34) der Kugelstange (9) (31) in ungehinderter Eingreifposition ist.

2.) Trennbare Anhängerkupplung für Kraftfahrzeuge, bei der ein am
Kraftfahrzeug befestigter Grundkörper eine von diesem trennbare
Kugelstange aufnimmt, nach Anspruch 1, dadurch gekennzeichnet, daß
die Sperre (4) (37) und das Fixierelement (3) (33) an der Kugelstange (9) (31) (Zugstange) befestigt sind und am KFZ der Bolzen mit
der Ausnehmung (10) (34) für das Fixierelement (3) (33).

3.) Trennbare Anhängerkupplung für Kraftfahrzeuge, bei der ein am
Kraftfahrzeug befestigter Grundkörper eine von diesem trennbare
Kugelstange aufnimmt, nach Anspruch 1 + 2, dadurch gekennzeichnet,
daß das Fixierelement (3) (33) translatorisch bewegbar ausgeführt ist.

4.) Trennbare Anhängerkupplung für Kraftfahrzeuge, bei der ein am
Kraftfahrzeug befestigter Grundkörper eine von diesem

-9-

trennbare Kugelstange aufnimmt, nach Anspruch 1-3, dadurch gekennzeichnet, daß das Fixierelement (3) (33) rotatorisch bewegbar ausgeführt ist.

5.) Trennbare Anhängerkupplung für Kraftfahrzeuge, bei der ein am Kraftfahrzeug befestigter Grundkörper eine von diesem trennbare Kugelstange aufnimmt, nach Anspruch 1-4, dadurch gekennzeichnet, daß die Sperre (4) (37) federbelastet ausgeführt ist.

6.) Trennbare Anhängerkupplung für Kraftfahrzeuge, bei der ein am Kraftfahrzeug befestigter Grundkörper eine von diesem trennbare Kugelstange aufnimmt, nach Anspruch 1-4, dadurch gekennzeichnet, daß die Sperre (4) (37) als Pendel ausgebildet ist.

7.) Trennbare Anhängerkupplung für Kraftfahrzeuge, bei der ein am Kraftfahrzeug befestigter Grundkörper eine von diesem trennbare Kugelstange aufnimmt, nach Anspruch 1-3 + 5, dadurch gekennzeichnet, daß der Sperrteil des Fixierbolzens (3) (33) mit mindestens einer schrägen Ebene (26) versehen ist, die korrespondiert in einer innerhalb der Ausnehmung (10) in der Kugelstange (9) (31) angeordneten Ebene (25).

8.) Trennbare Anhängerkupplung nach Anspruch 7, dadurch gekennzeichnet, daß die Schräge Ebene (26) in Relation zu der Ebene (25) so ausgebildet und angeordnet ist, daß beim Einschub der Kugelstange (9) (31) diese (9) (31) in der Einschubrichtung bewegbar ist.

9.) Trennbare Anhängerkupplung nach Anspruch 1-8, dadurch gekennzeichnet, daß der in den Grundkörper (1) (32) eingeführte Teil der Kugelstange (9) (31) sowie der die Kugelstange (9) (31) aufnehmende Teil des Grundkörpers (1) (32) konisch ausgebildet sind.

10.) Trennbare Anhängerkupplung nach Anspruch 1-9, dadurch gekennzeichnet, daß die konisch ausgebildeten Teile kegelstumpfformig ausgebildet sind.

11.) Trennbare Anhängerkupplung nach Anspruch 1-10, dadurch gekennzeichnet, daß die konischen Teil der Kugelstange (9) (31) und des Grundkörpers (1) (32) mit in Richtung der Einschubbewegung verlaufenden Nuten (21) bzw. Federn versehen sind.

12.) Trennbare Anhängerkupplung nach Anspruch 1-11, dadurch gekennzeichnet, daß die Kontaktfläche der Kugelstange (31) (9) mit dem Grundkörper (1) (32) einen Winkel zur Längsmittelachse einschließen, der eine Selbsthemmung ausschließt.

13.) Trennbare Anhängerkuppplung nach Anspruch 1-12, dadurch gekennzeichnet, daß das Kontaktelement (27) (41) einstellbar ausgebildet ist.

14.) Trennbare Anhängerkupplung nach Anspruch 4, dadurch gekennzeichnet, daß das Fixierelement (3) (33) sowie die Ausnehmung (10) (34) in der Kugelstange (9) (31) im Eingriffbereich halbkreisförmig ausgebildet sind.

15.) Trennbare Anhängerkupplung nach Anspruch 1-14, dadurch gekennzeichnet, daß das Fixierelement (3) (33) in montiertem Zustand der Kupplung durch eine Sperre (4a) (42) in Eingriffstellung gehalten werden.

Fig 1

Fig. 2

Fig. 3

Fig. 4

Schnitt von fig. 4

Fig. 5

0160934

0160934

16

20

1

17

24

Fig. 6

Fig 7